# EUROPÄISCHE PATENTSCHRIFT

(11) **EP 2 839 623 B1**
(45) Veröffentlichungstag und Bekanntmachung des Hinweises auf die Patenterteilung: **18.05.2016**
(21) Anmeldenummer: 12743118.7
(22) Anmeldetag: 24.07.2012
(51) Int. Cl.: H04L 29/06, H04L 29/08, G06F 9/54

(54) **VERFAHREN UND VORRICHTUNGEN ZUM SCHREIBZUGRIFF AUF EINE VARIABLE IN EINEM SERVER**
METHOD AND DEVICES FOR WRITE ACCESS TO A VARIABLE IN A SERVER
PROCÉDÉ ET DISPOSITIFS POUR L'ACCÈS EN ÉCRITURE À UNE VARIABLE DANS UN SERVEUR

(43) Veröffentlichungstag der Anmeldung: 25.02.2015
(73) Patentinhaber: Siemens Aktiengesellschaft, 80333 München (DE)
(72) Erfinder: VOLKMANN, Frank, 90475 Nürnberg (DE); ERLMANN, Markus, 95336 Mainleus (DE); HOCK, Christian, 90763 Fürth (DE)
(86) Internationale Anmeldenummer: PCT/EP2012/064457
(87) Internationale Veröffentlichungsnummer: WO 2014/015893

(56) Entgegenhaltungen:
- US-A1- 2002 144 020
- US-A1- 2010 205 613

## Beschreibung

Die Erfindung betrifft die Optimierung eines wiederholten Schreibzugriffs eines Client auf wenigstens eine Variable in einem Server mittels OPC-UA.

OPC-UA (= OPC Unified Architecture) ist ein Kommunikationsprotokoll und Informationsmodell zur Kommunikation unterschiedlicher automatisierungstechnischer Komponenten (Geräte), siehe http://www.opcfoundation.org.

OPC-UA unterliegt einem strengen Client-Server-Modell, d.h. Server stellen Informationen zur Verfügung, die Clients von den Servern abfragen. Die Kommunikation zwischen einem Client und einem Server wird dabei vom Client initiiert, beginnt also immer beim Client und ist somit asymmetrisch. Sollen zwei Komponenten (Geräte) gleichberechtigt (symmetrisch) miteinander kommunizieren, müssen heute beide gleichzeitig Client und Server sein. Da es auf der Transportebene Einschränkungen gibt, wo sich Clients und Server im Netz befinden können, kann nicht in jeder Situation jeder Client auch zum Server gemacht werden. Außerdem erfordert gleichzeitige Client- und Serverfunktionalität kommunizierender Geräte einen höheren Aufwand an Entwicklung und Ressourcen auf beiden Geräten. Dieser Aufwand ist insbesondere im Feldbereich oft nicht vertretbar, da die dort eingesetzten Geräte und Netze häufig relativ leistungsschwach sind.

Im Feldbereich liefern Sensoren und Aktoren Prozesswerte bzw. wirken auf einen Prozess ein. Diese Prozesswerte werden von OPC-UA-Servern zur Verfügung gestellt, die z.B. auf den Sensoren bzw. Aktoren implementiert sind. Solche Sensoren und Aktoren sind in der Regel sehr leistungsschwache Geräte, während diejenigen Geräte, die die Daten von Sensoren oder Aktoren in Empfang nehmen, wesentlich leistungsfähiger als die Sensoren und Aktoren sind. Dies steht im Widerspruch zum allgemeinen Verständnis von Client und Server, dass der Server die leistungsfähigere Maschine ist.

Verschiedene Geräte in einem Gerät in einem Netzwerk, insbesondere Aktoren, werden wiederholt angesteuert. So erhalten z.B. Aktoren zyklisch neue Werte von einem Sollwertgeber, und Sensoren liefern ständig neue schreibbare Werte.

US 2010/0205613 A1 offenbart ein Verfahren, eine Vorrichtung und ein System zur zeitlich begrenzten Anwendung an sich zeitlich nicht eingeschränkter Funktionen. Dabei werden die Funktionen in einem zeitbegrenzenden Methodenadapter gekapselt, der von einem Aufrufer aufgerufen werden kann.

Der Erfindung liegt die Aufgabe zugrunde, ein Verfahren zum Optimieren eines wiederholten Schreibzugriffs eines Client auf wenigstens eine Variable in einem Server in einem Netzwerk mittels OPC-UA Kommunikation anzugeben. Ferner liegt der Erfindung die Aufgabe zugrunde, Hardware zur Durchführung des Verfahrens anzugeben.

Die Aufgabe wird erfindungsgemäß hinsichtlich des Verfahrens durch die Merkmale des Anspruchs 1 und hinsichtlich der Hardware durch die Merkmale der Ansprüche 5, 6 und 10 gelöst.

Vorteilhafte Ausgestaltungen der Erfindung sind Gegenstand der Unteransprüche.

Bei dem erfindungsgemäßen Verfahren wird ein wiederholter Schreibzugriff eines Client auf wenigstens eine Variable in einem Server mittels OPC-UA optimiert. Dabei wird auf dem Server eine Aufrufmethode für einen wiederholten Schreibzugriff bereitgestellt, wobei die Aufrufmethode die Mitteilung eines Zugriffzeitintervalls und wenigstens einer Variable für den wiederholten Schreibzugriff umfasst. Von dem Client wird die Aufrufmethode auf dem Server aufgerufen und dem Server werden dabei ein Zugriffszeitintervall und die wenigstens eine Variable für den wiederholten Schreibzugriff mitgeteilt. Von dem Server wird nach Aufruf der Aufrufmethode durch den Client eine Datenstruktur für den wiederholten Schreibzugriff angelegt und während des Zugriffzeitintervalls aufrecht erhalten. Dem Server werden zu schreibende Werte der wenigstens einen Variable während des Zugriffzeitintervalls von dem Client übermittelt. Von dem Server wird jeder von dem Client übermittelte Wert der zugehörigen Variable mittels der Datenstruktur zugewiesen.

Dabei wird hier und im Folgenden unter einer Variable in einem Server eine Variable verstanden, die als ein OPC-UA-Knoten in einem Adressraum des Servers abgelegt ist. Ferner werden hier und im Folgenden unter einem Server immer ein OPC-UA-Server und unter einem Client immer ein OPC-UA-Client verstanden.

Erfindungsgemäß wird also von dem Server für einen Client eine Datenstruktur bereitgestellt, mittels derer der Client wiederholt Werte einer oder mehrerer Variablen in dem Server schreiben kann, nachdem er sich dafür bei dem Server durch Aufrufen einer entsprechenden Aufrufmethode angemeldet hat. Welche Variable oder Variablen auf diese Weise schreibbar sind und für welche Zeitdauer dies möglich ist, wird dabei mittels der Aufrufmethode festgelegt.

Bei wiederholtem Schreiben bzw. Ändern des Wertes einer Variable braucht der Server dadurch im Unterschied zu einer herkömmlichen OPC-UA nicht für jeden Schreibzugriff des Client eine neue Datenstruktur aufzubauen, die nach dem Schreibzugriff wieder aufgelöst wird. Dies entlastet den Server, da nicht für jeden Schreibzugriff eine separate Datenstruktur zur Festlegung der betroffenen Variablen, Attribute dieser Variablen und Qualität der Attribute aufgebaut und aufgelöst werden müssen, und erhöht somit die erzielbare Durchsatzrate des Servers. Insbesondere entlastet dies vorteilhaft leistungsschwache Server, die z.B. auf Sensoren oder Aktoren eines Netzwerkes implementiert werden.

Das erfindungsgemäße Verfahren ergänzt die herkömmliche OPC-UA damit um eine Struktur, die als eine Schreib-Subscription interpretiert werden kann. Herkömmliche OPC-UA-Subscriptions ermöglichen es einem Client, sich bei einem Server zum wiederholten Lesen von Werten einer Menge von Variablen anzumelden, wobei dem Client Wertänderungen dieser Variablen von dem Server nach der Anmeldung des Client mitgeteilt werden. Das erfindungsgemäße Verfahren sieht eine analoge Schreib-Subscription vor, mittels derer ein Client Werte von einer oder mehreren Variablen in einem Server während eines festlegbaren Zugriffzeitintervalls schreiben und ändern kann.

In einer bevorzugten Ausgestaltung der Erfindung wird die von dem Server angelegte Datenstruktur nach Ablauf des Zugriffzeitintervalls gelöscht.

Dadurch wird vorteilhaft der für die Datenstruktur verwendete Speicherplatz wieder verfügbar gemacht, nachdem die Datenstruktur nicht mehr benötigt wird.

In einer weiteren bevorzugten Ausgestaltung der Erfindung wird der Datenstruktur von dem Server eine eindeutige Identifikationsnummer zugewiesen und dem Client diese Identifikationsnummer von dem Server mitgeteilt.

Dadurch wird der Client vorteilhaft über die Erstellung und Verfügbarkeit der Datenstruktur informiert, so dass er Kenntnis erhält, dass und ab wann er das Schreiben von Wertänderungen von Variablen veranlassen kann. Die Identifikationsnummer ermöglicht vorteilhaft eine eindeutige Kennzeichnung der angelegten Datenstruktur, die vom Client und Server in der weiteren Kommunikation verwendet werden kann.

In einer weiteren bevorzugten Ausgestaltung der Erfindung wird dem Client von dem Server nach jedem Schreiben eines Wertes der wenigstens einen Variable eine Schreibnachricht gesendet, um dem Client das Schreiben des Wertes mitzuteilen.

Dadurch wird dem Client vorteilhaft eine von ihm gewünschte Wertänderung einer Variable mitgeteilt. Insbesondere erhält der Client durch das Ausbleiben einer Schreibnachricht Kenntnis davon, dass eine von ihm gewünschte Wertänderung möglicherweise nicht ausgeführt wurde, so dass er dem Server die gewünschte Wertänderung erneut übermitteln kann.

Erfindungsgemäße Hardware ist zur Durchführung des erfindungsgemäßen Verfahrens ausgebildet und ermöglicht somit die Realisierung der oben genannten Vorteile dieses Verfahrens.

Ein erfindungsgemäßer Client ist dementsprechend dazu ausgebildet, auf dem Server die Aufrufmethode für einen wiederholten Schreibzugriff aufzurufen und dem Server damit ein Zugriffzeitintervall und die wenigstens eine Variable für den wiederholten Schreibzugriff mitzuteilen und dem Server zu schreibende Werte der wenigstens einen Variable während des Zugriffzeitintervalls von dem Client zu übermitteln.

Ein erfindungsgemäßer Server ist dazu ausgebildet, die Aufrufmethode für einen wiederholten Schreibzugriff bereitzustellen, nach Aufruf der Aufrufmethode durch den Client eine Datenstruktur für den wiederholten Schreibzugriff anzulegen und während des Zugriffzeitintervalls aufrecht zu erhalten und die von dem Client übermittelten zu schreibenden Werte der wenigstens einen Variable mittels der Datenstruktur zu schreiben.

In bevorzugten Ausgestaltungen der Erfindung ist der Server dazu ausgebildet, die von ihm angelegte Datenstruktur nach Ablauf des Zugriffzeitintervalls zu löschen, und/oder der Datenstruktur eine eindeutige Identifikationsnummer zuzuweisen und dem Client diese Identifikationsnummer mitzuteilen, und/oder dem Client nach jedem Schreiben eines Wertes der wenigstens einen Variable eine Schreibnachricht zu senden, um dem Client das Schreiben des Wertes mitzuteilen.

Ein erfindungsgemäßes Netzwerk umfasst wenigstens einen erfindungsgemäßen Client und wenigstens einen erfindungsgemäßen Server.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch einen wiederholten OPC-UA-Schreibzugriff eines Client auf eine Variable in einem Server gemäß dem Stand der Technik,
- FIG 2: schematisch zwei Geräte, die miteinander über OPC-UA-Subscriptions gemäß dem Stand der Technik kommunizieren,
- Fig. 3: schematisch die Erzeugung einer Datenstruktur für den wiederholten Schreibzugriff eines Client auf eine Variable in einem Server, und
- Fig. 4: schematisch einen wiederholten Schreibzugriff eines Client auf eine Variable in einem Server.

Einander entsprechende Teile sind in allen Figuren mit den gleichen Bezugszeichen versehen.

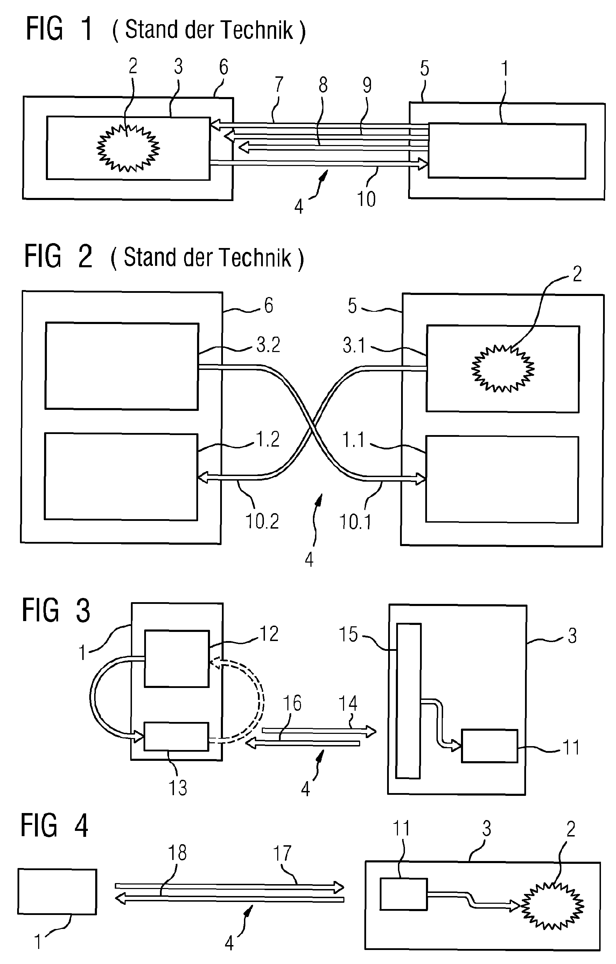

Figur 1 zeigt schematisch einen wiederholten OPC-UA-Schreibzugriff eines Client 1 auf eine Variable 2 in einem Server 3 gemäß dem Stand der Technik. Dabei ist der Client 1 in einem Netzwerk 4 auf einem ersten Gerät 5 implementiert. Der Server 3 ist in dem Netzwerk 4 auf einem zweiten Gerät 6 implementiert.

Beispielsweise ist das zweite Gerät 6 ein Aktor, z.B. ein Motor, und das erste Gerät 5 ein Sollwertgeber für den Aktor oder ein Gateway, das Sollwerte für den Aktor, beispielsweise Soll-Achswinkel, über das Netzwerk 4 empfängt und an den Aktor weiterleitet.

Der Wert der Variable 2 ist der Sollwert, der von dem Client 1 durch den wiederholten OPC-UA-Schreibzugriff verändert wird. Dazu sendet der Client 1 dem Server 3 für jede Sollwertänderung eine separate OPC-UA-Schreibanforderung 7, 8, 9. Die Schreibanforderungen 7, 8, 9 werden von dem Server 3 unabhängig voneinander bearbeitet. Für jede Schreibanforderung 7, 8, 9 wird also vom Client 1 der gesamte Schreibkontext einschließlich der Bestimmung der Variable 2, Attribute und Qualität der Attribute neu aufgebaut und zum Server 3 übertragen. Die Schreibanforderungen 7, 8, 9 werden vom Server 3 empfangen und unabhängig voneinander zur Zuweisung der Wertänderung der Variable 2 ausgewertet.

Das zweite Gerät 6 teilt dem ersten Gerät 5 ferner Istwerte über eine herkömmliche OPC-UA-Subscription 10 des Client 1 bei dem Server 3 mit. Im oben betrachteten Beispiel, dass das zweite Gerät 6 ein Motor ist, ist ein möglicher Istwert beispielsweise ein momentaner Achswinkel des Motors. Dabei wird jeder Istwert in einer weiteren, hier nicht dargestellten Variable gespeichert, auf die der Client 1 mittels der OPC-UA-Subscription 10 angemeldet ist und deren Wertänderungen dem Client 1 von dem Server 3 im Rahmen der OPC-UA-Subscription 10 mitgeteilt werden.

Der ständige Neuaufbau von OPC-UA-Schreibzugriffen des Client 1 auf die Variable 2 des Servers 3 belastet den Client 1 und den Server 3 erheblich und reduziert die möglichen Datendurchsatzraten.

Figur 2 zeigt schematisch eine zweite Möglichkeit für die beiden in Figur 1 dargestellten Geräte 5, 6, Soll- und Istwerte gemäß dem Stand der Technik mit herkömmlicher OPC-UA in dem Netzwerk 4 auszutauschen und zu aktualisieren. Dazu sind auf dem ersten Gerät 5 ein erster Client 1.1 und ein erster Server 3.1 und auf dem zweiten Gerät 6 ein zweiter Client 1.2 und ein zweiter Server 3.2 implementiert. Wie in dem in Figur 1 gezeigten Beispiel werden die aktuellen Istwerte über eine erste herkömmliche OPC-UA-Subscription 10.1 des ersten Client 1.1 bei dem zweiten Server 3.2 von dem zweiten Gerät 6 an das erste Gerät 5 übermittelt. Sollwertänderungen werden dem zweiten Gerät 6 von dem ersten Gerät 5 jedoch über eine zweite herkömmliche OPC-UA-Subscription 10.2 mitgeteilt, mit der der zweite Client 1.2 an der Variablen 2 in dem ersten Server 3.1 angemeldet ist. Dieser Austausch von Änderungen der Ist- und Sollwerte zwischen den Geräten 5, 6 vermeidet zwar den ständigen Neuaufbau von OPC-UA-Schreibzugriffen wie in dem in Figur 1 gezeigten Beispiel, erfordert stattdessen jedoch, dass auf beiden Geräten 5, 6 jeweils ein Client 1.1, 1.2 und ein Server 3.1, 3.2 implementiert sind. Eine derartige gleichzeitige Client- und Serverfunktionalität ist jedoch aufwändig und aus bereits oben genannten Gründen nicht für jedes Netzwerkgerät realisierbar.

Die Figuren 3 und 4 zeigen einen erfindungsgemäßen wiederholten Schreibzugriff eines Client 1 auf eine Variable 2 in einem Server 3 in einem Netzwerk 4 mittels OPC-UA.

Figur 3 zeigt schematisch die Erzeugung einer Datenstruktur 11 für den wiederholten Schreibzugriff des Client 1 auf die Variable 2 in dem Server 3. Auf dem Server 3 wird eine Aufrufmethode CreateWriteSubscription für einen wiederholten Schreibzugriff bereitgestellt. Die Aufrufmethode umfasst die Mitteilung eines Zugriffzeitintervalls und wenigstens einer Variable 2 für den wiederholten Schreibzugriff.

Eine Applikation 12 des Client 1, die beispielsweise während eines Zugriffzeitintervalls von 250 ms Schreibzugriff auf die Variable 2 wünscht, teilt diesen Wunsch einem Client-OPC-UA-Kommunikationsstack 13 des Client 1 mit. Der Client-OPC-UA-Kommunikationsstack 13 erzeugt daraufhin eine entsprechende Aufrufnachricht 14 mit dem Aufruf CreateWriteSubscription(2, 250 ms) und sendet diese Aufrufnachricht 14 über das Netzwerk 4 an den Server 3.

Ein Server-OPC-UA-Kommunikationsstack 15 des Servers 3 empfängt die Aufrufnachricht 14. Der Server 3 legt daraufhin für den Client 1 die Datenstruktur 11 für den wiederholten Schreibzugriff auf die Variable 2 an, weist der Datenstruktur 11 eine eindeutige Identifikationsnummer zu und erhält die Datenstruktur 11 während des Zugriffzeitintervalls aufrecht. Nach dem Anlegen der Datenstruktur 11 erzeugt der Server-OPC-UA-Kommunikationsstack 15 eine Anlegenachricht 16, die die Identifikationsnummer der Datenstruktur 11 enthält und das Anlegen der Datenstruktur 11 bestätigt, und sendet die Anlegenachricht 16 über das Netzwerk 4 an den Client 1, um dem Client 1 das Anlegen der Datenstruktur 11 und deren Identifikationsnummer mitzuteilen.

Der Client-OPC-UA-Kommunikationsstack 13 empfängt die Anlegenachricht 16 und teilt der Applikation 12 des Client 1 die Identifikationsnummer der Datenstruktur 11 mit.

Figur 4 zeigt schematisch einen wiederholten Schreibzugriff des Client 1 auf die Variable 2 in dem Server 3.

Um den Wert der Variable 2 während des Zugriffzeitintervalls zu ändern, sendet der Client 1 dem Server 3 über das Netzwerk 4 eine Wertänderungsnachricht 17, die die Identifikationsnummer der Datenstruktur 11 und den neuen Wert der Variable 2 enthält. Der Server 3 weist der Variable 2 daraufhin den neuen Wert zu und sendet dem Client 1 eine Schreibnachricht 18, die die Durchführung der Wertänderung bestätigt.

Im Unterschied zu anhand von Figur 1 beschriebenen herkömmlichen wiederholten OPC-UA-Schreibzugriffen wird die Datenstruktur 11 nur einmal angelegt und für jede während des Zugriffzeitintervalls erfolgende Wertänderung der Variable 2 verwendet. Dazu brauchen die beteiligten Geräte 5, 6 nicht wie im anhand von Figur 2 beschriebenen Beispiel sowohl Client- als auch Serverfunktionalität haben.

Die Datenstruktur 11 ähnelt einer herkömmlichen OPC-UA-Subscription 10 gemäß der OPC-UA-Spezifikation mit dem Unterschied, dass sie dem Client 1 wiederholten Schreibzugriff statt Lesezugriff auf die Variable 2 ermöglicht. Daher kann die Datenstruktur 11 als Schreib-Subscription interpretiert und bezeichnet werden.

Die Aufrufmethode CreateWriteSubscription entspricht dabei der Methode CreateSubscription zum Erzeugen einer herkömmlichen OPC-UA-Subscription 10. Die Anlegenachricht 16 entspricht einer CreateSubscription-Response einer herkömmlichen OPC-UA-Subscription 10. Eine Wertänderungsnachricht 17 entspricht einem Publish-Request einer herkömmlichen OPC-UA-Subscription 10 mit dem Unterschied, dass die Wertänderungsnachricht 17 bereits den geänderten Wert der Variable 2 enthält. Eine Schreibnachricht 18 entspricht einer Publish-Response einer herkömmlichen OPC-UA-Subscription 10 mit dem Unterschied, dass die Schreibnachricht 18 lediglich Statusinformation, nicht aber den geänderten Wert der Variable 2 enthält.

Obwohl die Erfindung im Detail durch ein bevorzugtes Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Der Schutzumfang wird durch die folgenden Ansprüche definiert.

## Patentansprüche

1. Verfahren zum Optimieren eines wiederholten Schreibzugriffs eines Client (1, 1.1, 1.2) auf wenigstens eine Variable (2) in einem Server (3, 3.1, 3.2) mittels OPC Unified Architecture, wobei
- auf dem Server (3, 3.1, 3.2) eine Aufrufmethode für einen wiederholten Schreibzugriff bereitgestellt wird, wobei die Aufrufmethode die Mitteilung eines Zugriffzeitintervalls und wenigstens einer Variable (2) für den wiederholten Schreibzugriff umfasst,
- von dem Client (1, 1.1, 1.2) die Aufrufmethode auf dem Server (3, 3.1, 3.2) aufgerufen wird und dem Server (3, 3.1, 3.2) dabei ein Zugriffzeitintervall und die wenigstens eine Variable (2) für den wiederholten Schreibzugriff mitgeteilt werden,
- von dem Server (3, 3.1, 3.2) nach Aufruf der Aufrufmethode durch den Client (1, 1.1, 1.2) eine Datenstruktur (11) für den wiederholten Schreibzugriff angelegt und während des Zugriffzeitintervalls aufrecht erhalten wird,
- dem Server (3, 3.1, 3.2) zu schreibende Werte der wenigstens einen Variable (2) während des Zugriffzeitintervalls von dem Client (1, 1.1, 1.2) übermittelt werden, und
- von dem Server (3, 3.1, 3.2) jeder von dem Client (1, 1.1, 1.2) übermittelte Wert der zugehörigen Variable (2) mittels der Datenstruktur (11) zugewiesen wird.

2. Verfahren nach Anspruch 1,
**dadurch gekennzeichnet, dass** die von dem Server (3, 3.1, 3.2) angelegte Datenstruktur (11) nach Ablauf des Zugriffzeitintervalls gelöscht wird.

3. Verfahren nach einem der vorhergehenden Ansprüche, **dadurch gekennzeichnet, dass** der Datenstruktur (11) von dem Server (3, 3.1, 3.2) eine eindeutige Identifikationsnummer zugewiesen wird und dem Client (1, 1.1, 1.2) diese Identifikationsnummer von dem Server (3, 3.1, 3.2) mitgeteilt wird.

4. Verfahren nach einem der vorhergehenden Ansprüche, **dadurch gekennzeichnet, dass** dem Client (1, 1.1, 1.2) von dem Server (3, 3.1, 3.2) nach jedem Schreiben eines Wertes der wenigstens einen Variable (2) eine Schreibnachricht (18) gesendet wird, um dem Client (1, 1.1, 1.2) das Schreiben des Wertes mitzuteilen.

5. Client (1, 1.1, 1.2) zur Durchführung des Verfahrens nach einem der vorhergehenden Ansprüche, wobei der Client (1, 1.1, 1.2) dazu ausgebildet ist, auf dem Server (3, 3.1, 3.2) die Aufrufmethode für einen wiederholten Schreibzugriff aufzurufen und dem Server (3, 3.1, 3.2) damit ein Zugriffzeitintervall und die wenigstens eine Variable (2) für den wiederholten Schreibzugriff mitzuteilen und dem Server (3, 3.1, 3.2) zu schreibende Werte der wenigstens einen Variable (2) während des Zugriffzeitintervalls von dem Client (1, 1.1, 1.2) zu übermitteln.

6. Server (3, 3.1, 3.2) zur Durchführung des Verfahrens nach einem der Ansprüche 1 bis 4, wobei der Server (3, 3.1, 3.2) dazu ausgebildet ist, die Aufrufmethode für einen wiederholten Schreibzugriff bereitzustellen, nach Aufruf der Aufrufmethode durch den Client (1, 1.1, 1.2) eine Datenstruktur (11) für den wiederholten Schreibzugriff anzulegen und während des Zugriffzeitintervalls aufrecht zu erhalten und die von dem Client (1, 1.1, 1.2) übermittelten zu schreibenden Werte der wenigstens einen Variable (2) mittels der Datenstruktur (11) zu schreiben.

7. Server (3, 3.1, 3.2) nach Anspruch 6,
**dadurch gekennzeichnet, dass** der Server (3, 3.1, 3.2) dazu ausgebildet ist, die von ihm angelegte Datenstruktur (11) nach Ablauf des Zugriffzeitintervalls zu löschen.

8. Server (3, 3.1, 3.2) nach Anspruch 6 oder 7,
**dadurch gekennzeichnet, dass** der Server (3, 3.1, 3.2) dazu ausgebildet ist, der Datenstruktur (11) eine eindeutige Identifikationsnummer zuzuweisen und dem Client (1, 1.1, 1.2) diese Identifikationsnummer mitzuteilen.

9. Server (3, 3.1, 3.2) nach einem der Ansprüche 6 bis 8, **dadurch gekennzeichnet, dass** der Server (3, 3.1, 3.2) dazu ausgebildet ist, dem Client (1, 1.1, 1.2) nach jedem Schreiben eines Wertes der wenigstens einen Variable (2) eine Schreibnachricht (18) zu senden, um dem Client (1, 1.1, 1.2) das Schreiben des Wertes zu bestätigen.

10. Netzwerk (4) zur Durchführung des Verfahrens nach einem der Ansprüche 1 bis 4, umfassend wenigstens einen Client (1, 1.1, 1.2) gemäß Anspruch 5 und wenigstens einen Server (3, 3.1, 3.2) gemäß einem der Ansprüche 6 bis 9.

## Claims

1. Method for optimizing repeated write access by a client (1, 1.1, 1.2) to at least one variable (2) in a server (3, 3.1, 3.2) by means of OPC Unified Architecture, wherein
- a call method for repeated write access is provided on the server (3, 3.1, 3.2), the call method comprising the notification of an access time interval and at least one variable (2) for the repeated write access,
- the client (1, 1.1, 1.2) calls the call method on the server (3, 3.1, 3.2) and the server (3, 3.1, 3.2) is notified of an access time interval and the at least one variable (2) for the repeated write access in the process,
- the server (3, 3.1, 3.2) creates a data structure (11) for the repeated write access after the call method has been called by the client (1, 1.1, 1.2) and maintains said data structure during the access time interval,
- values of the at least one variable (2) which are to be written are transmitted to the server (3, 3.1, 3.2) by the client (1, 1.1, 1.2) during the access time interval, and
- the server (3, 3.1, 3.2) allocates each value transmitted by the client (1, 1.1, 1.2) to the associated variable (2) by means of the data structure (11).

2. Method according to Claim 1,
**characterized in that** the data structure (11) created by the server (3, 3.1, 3.2) is deleted after expiry of the access time interval.

3. Method according to one of the preceding claims, **characterized in that** the server (3, 3.1, 3.2) allocates a unique identification number to the data structure (11) and the server (3, 3.1, 3.2) notifies the client (1, 1.1, 1.2) of this identification number.

4. Method according to one of the preceding claims, **characterized in that** the server (3, 3.1, 3.2) transmits a write message (18) to the client (1, 1.1, 1.2) each time a value of the at least one variable (2) is written in order to notify the client (1, 1.1, 1.2) of the writing of the value.

5. Client (1, 1.1, 1.2) for carrying out the method according to one of the preceding claims, the client (1, 1.1, 1.2) being designed to call the call method for repeated write access on the server (3, 3.1, 3.2) and therefore to notify the server (3, 3.1, 3.2) of an access time interval and the at least one variable (2) for the repeated write access and to transmit values of the at least one variable (2) which are to be written to the server (3, 3.1, 3.2) during the access time interval.

6. Server (3, 3.1, 3.2) for carrying out the method according to one of Claims 1 to 4, the server (3, 3.1, 3.2) being designed to provide the call method for repeated write access, to create a data structure (11) for the repeated write access after the call method has been called by the client (1, 1.1, 1.2) and to maintain said data structure during the access time interval and to write the values of the at least one variable (2) which are to be written and have been transmitted by the client (1, 1.1, 1.2) by means of the data structure (11).

7. Server (3, 3.1, 3.2) according to Claim 6,
**characterized in that** the server (3, 3.1, 3.2) is designed to delete the data structure (11) created by it after expiry of the access time interval.

8. Server (3, 3.1, 3.2) according to Claim 6 or 7, **characterized in that** the server (3, 3.1, 3.2) is designed to allocate a unique identification number to the data structure (11) and to notify the client (1, 1.1, 1.2) of this identification number.

9. Server (3, 3.1, 3.2) according to one of Claims 6 to 8, **characterized in that** the server (3, 3.1, 3.2) is designed to transmit a write message (18) to the client (1, 1.1, 1.2) each time a value of the at least one variable (2) is written in order to confirm the writing of the value to the client (1, 1.1, 1.2).

10. Network (4) for carrying out the method according to one of Claims 1 to 4, comprising at least one client (1, 1.1, 1.2) according to Claim 5 and at least one server (3, 3.1, 3.2) according to one of Claims 6 to 9.

## Revendications

1. Procédé d'optimisation d'un accès en écriture répété d'un client (1, 1.1, 1.2) à au moins une variable (2) dans un serveur (3, 3.1, 3.2) au moyen d'une architecture unifiée OPC,
- une méthode d'appel étant fournie sur le serveur (3, 3.1, 3.2) pour un accès en écriture répété, la méthode d'appel comprenant la communication d'un créneau d'accès et d'au moins une variable (2) pour l'accès en écriture répété,
- la méthode d'appel étant appelée par le client (1, 1.1, 1.2) sur le serveur (3, 3.1, 3.2) et un créneau d'accès et l'au moins une variable (2) pour l'accès en écriture répété étant communiqués au serveur (3, 3.1, 3.2) dans ce cadre,
- une structure de données (11) étant créée par le serveur (3, 3.1, 3.2) pour l'accès en écriture répété après l'appel de la méthode d'appel par le client (1, 1.1, 1.2) et étant maintenue pendant le créneau d'accès,
- des valeurs à écrire de l'au moins une variable (2) étant communiquées par le client (1, 1.1, 1.2) au serveur (3, 3.1, 3.2) pendant le créneau d'accès et
- chaque valeur communiquée par le client (1, 1.2, 1.2) étant affectée par le serveur (3, 3.1, 3.2) à la variable associée (2) au moyen de la structure de données (11).

2. Procédé selon la revendication 1, **caractérisé en ce que** la structure de données (11) créée par le serveur (3, 3.1, 3.2) est effacée après l'expiration du créneau d'accès.

3. Procédé selon l'une des revendications précédentes, **caractérisé en ce qu'**un numéro d'identification univoque est affecté à la structure de données (11) par le serveur (3, 3.1, 3.2) et **en ce que** ce numéro d'identification est communiqué au client (1, 1.1, 1.2) par le serveur (3, 3.1, 3.2).

4. Procédé selon l'une des revendications précédentes, **caractérisé en ce qu'**un message d'écriture (18) est envoyé au client (1, 1.1, 1.2) par le serveur (3, 3.1, 3.2) après chaque écriture d'une valeur de l'au moins une variable (2) pour communiquer l'écriture de la valeur au client (1, 1.1, 1.2).

5. Client (1, 1.1, 1.2) pour exécuter le procédé selon l'une des revendications précédentes, le client (1, 1.1, 1.2) étant réalisé pour appeler sur le serveur (3, 3.1, 3.2) la méthode d'appel pour un accès en écriture répété et pour ainsi communiquer au serveur (3, 3.1, 3.2) un créneau d'accès et l'au moins une variable (2) pour l'accès en écriture répété et pour que le client (1, 1.1, 1.2) transmette au serveur (3, 3.1, 3.2) des valeurs à écrire de l'au moins une variable (2) pendant le créneau d'accès.

6. Serveur (3, 3.1, 3.2) pour exécuter le procédé selon l'une des revendications 1 à 4, le serveur (3, 3.1, 3.2) étant réalisé pour fournir la méthode d'appel pour un accès en écriture répété, créer une structure de données (11) pour l'accès en écriture répété après l'appel de la méthode d'appel par le client (1, 1.1, 1.2) et la maintenir pendant le créneau d'accès et pour écrire au moyen de la structure de données (11) les valeurs de l'au moins une variable (2) transmises par le client (1, 1.1, 1.2).

7. Serveur (3, 3.1, 3.2) selon la revendication 6, **caractérisé en ce que** le serveur (3, 3.1, 3.2) est réalisé pour effacer la structure de données (11) créée par lui-même après l'expiration du créneau d'accès.

8. Serveur (3, 3.1, 3.2) selon la revendication 6 ou 7, **caractérisé en ce que** le serveur (3, 3.1, 3.2) est réalisé pour affecter un numéro d'identification univoque à la structure de données (11) et communiquer ce numéro d'identification au client (1, 1.1, 1.2).

9. Serveur (3, 3.1, 3.2) selon l'une des revendications 6 à 8, **caractérisé en ce que** le serveur (3, 3.1, 3.2) est réalisé pour envoyer un message d'écriture (18) au client (1, 1.1, 1.2) après chaque écriture d'une valeur de l'au moins une variable (2) pour confirmer l'écriture de la valeur au client (1, 1.1, 1.2).

10. Réseau (4) pour exécuter le procédé selon l'une des revendications 1 à 4, comprenant au moins un client (1, 1.1, 1.2) selon la revendication 5 et au moins un serveur (3, 3.1, 3.2) selon l'une des revendications 6 à 9.
